# EUROPEAN PATENT SPECIFICATION

(11) **EP 2 039 597 B1**
(45) Date of publication and mention of the grant of the patent: **27.10.2010**
(21) Application number: 07768276.3
(22) Date of filing: 06.07.2007
(51) Int. Cl.: B62D 55/253, B62D 55/24

(54) **RUBBER CRAWLER**
GUMMIRAUPENKETTE
CHENILLE EN CAOUTCHOUC

(30) Priority: 06.07.2006 JP 2006187054
(43) Date of publication of application: 25.03.2009
(73) Proprietor: Bridgestone Corporation, Tokyo 104-8340 (JP)
(72) Inventor: SHIMOZONO, Nobuo, Tokyo 104-8340 (JP)
(74) Representative: Whalley, Kevin
(86) International application number: PCT/JP2007/063544
(87) International publication number: WO 2008/004652

(56) References cited:
- JP-A- 2000 072 056
- JP-A- 2005 186 922

## Description

### Technical Field

The present invention relates to an improved rubber crawler, and in particular aims to improve the durability of a rubber crawler provided with protrusions for preventing the rubber crawler from coming-off its wheels.

### Related Art

Metal cores with a mechanism for preventing coming-off from wheels are often provided in rubber crawlers for use in construction machinery and the like. Namely, rubber crawlers mainly come off their wheels due to an external force from the side moving metal cores, provided buried at a certain pitch within the rubber crawler, moving within the rubber. Protrusions of a meshing structure, which mesh adjoining metal cores provided buried within the rubber crawler with each other, are consequently formed along the longitudinal direction of the rubber crawler in order to restrict movement of these metal cores. These (protrusions) mesh with each other, thereby preventing the movement of the metal cores (Patent Document 1).

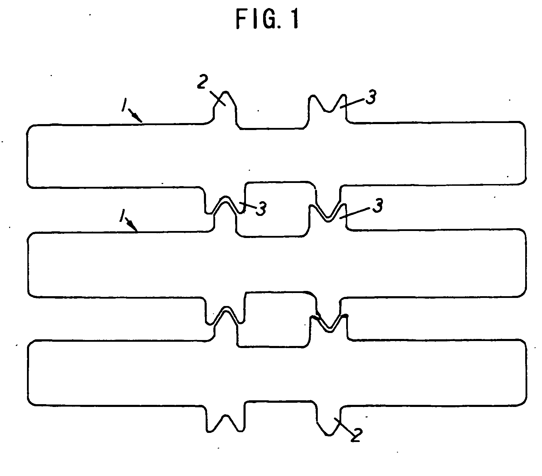

FIG 1 is a plan view in which only the metal cores have been extracted, and metal cores 1 are each formed with protrusions 2, 3 protruding out in the peripheral direction of a rubber crawler 5. The leading end of one of the protrusions 2 is formed in a pointed portion, and the leading end of the other protrusions 3 is formed with two forked portions that mesh with the pointed portions so that adjoining metal cores 1, 1 are meshed together with each other. Consequently this configuration is one in which no lateral large displacement occurs, for example, even if an external force from the side is applied, since the protrusions 2, 3 are meshed with each other. The structure of the protrusions is not just this configuration, and it goes without saying that there are, of course, various protrusions.

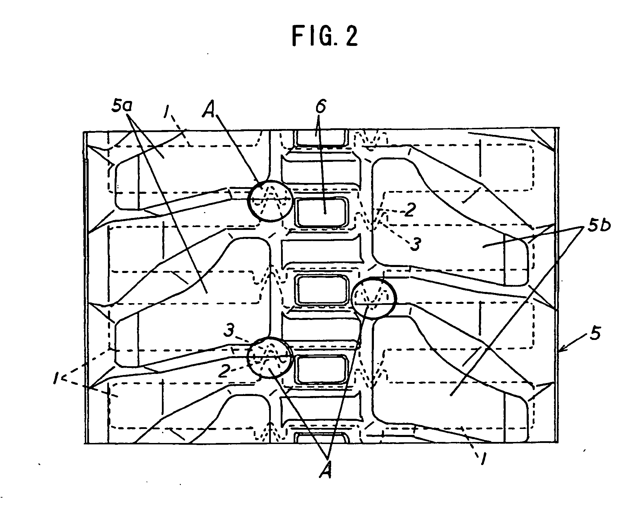

FIG 2 is an external peripheral plan view of the rubber crawler 5 to which the metal cores 1 of FIG 1 have been applied as they are. Rubber lugs 5a, 5b are formed to the outer peripheral surface of the rubber crawler 5, and in consideration of vibrations to the ground are generally arranged at the left and right in the width direction so at to form a staggered pattern. In this example, being a rubber crawler for construction machinery, the rubber lugs 5a, 5b are basically arranged so as to straddle adjoining pairs of metal cores, however the construction is such that a portion (A) of the above described wheel fall-off prevention protrusions 2, 3 is not covered by the rubber lugs 5a, 5b.

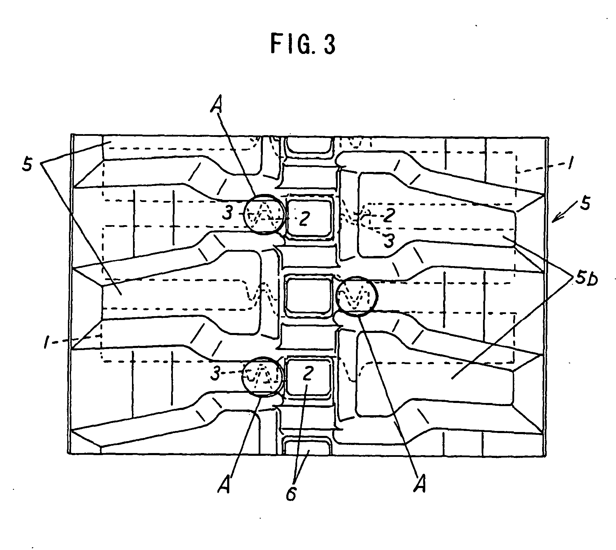

FIG 3 is also, similarly to FIG 2, an external peripheral plan view of the rubber crawler 5, and is constructed in the same manner as before with a portion (A) of the wheel fall-off prevention protrusions 2, 3 not covered by the rubber lugs 5a, 5b. Note that reference numeral 6 refers to a sprocket engagement hole.

When such a rubber crawler 5 is entrained around sprockets and idlers, the leading end of the wheel fall-off prevention protrusions 2, 3 move so as to project out by a large amount toward the outer peripheral side. However, the outer peripheral side of the wheel fall-off prevention protrusions 2, 3, not covered by the rubber lugs 5a, 5b, are only covered by-rubber thickness of the base body (lug base) of the rubber crawler 5, and the amount of rubber is extremely thin in comparison to positions covered by the rubber lugs 5a, 5b. Therefore, since distortion of the rubber at these positions is great, cracks readily occurred therein due to lending fatigue and external flaws also readily occurred.
JP 2000-072056 shows an elastic crawler according to independent claim 1. Patent Document: Japanese Patent Application Laid-Op No. 9-226639

### Disclosure of the Invention

### Problem to be Solved by the Invention

The present invention is made in consideration of the above conventional technologies and aims to improve the durability of a rubber crawler provided with protrusions for wheel fall-off prevention.

### Method of Solving the Problem

A rubber crawler according to a first aspect is provided as claimed in claim 1.

In the rubber crawler of claim 1, conventionally occurring drawbacks can all be reduced since rubber lugs are formed to the outer peripheral surface so as to correspond to protrusion meshing positions that are particularly susceptible to external flaws or cracking. Consequently durability of the rubber crawler is significantly enhanced.

The surface pressure on the rubber lugs of the rubber crawler of claim 1 is lowered, raising the durability of the rubber lugs, and so is particularly optimally applied to construction machines with high load.

The rubber crawler of claim 1 acts at the same time as a counter measure to vibrations to the road.

In the rubber crawler of claim 1 the meshing portions are covered by the skirt portions that have a rubber thickness thicker than the lug base and are separated from the ground contact surface. Consequently external flaws are not readily caused thereto, and any external flaws do not readily reach the metal core.

In the rubber crawler of claim 1 the rubber lugs cover at least one portion of the end portions of the metal cores in the front-rear direction.

In the rubber crawler of claim 2, since the rubber lugs are present imposed between the end portions of the metal cores and the ground contact surface, the end portions of the rubber crawler do not readily peel off on contact with stone and the like.

In the rubber crawler of claim 3, a lug base between left and right rubber lugs and a lug base between front and rear rubber lugs are in the same plane.

In the rubber crawler of claim 3 breakage of the lug bases is suppressed, since there is no step formed at the lug bases.

In the rubber crawler of claim 4 the wheel fall-off prevention protrusions are provided axially symmetrical to each other about a center line of the metal core, or are provided with point symmetry to the center point of the metal core.

In the rubber crawler of claim 4 surface pressure distribution on the rubber lugs is made uniform, and so occurrences of external flaws, abrasion, and vibration are reduced.

### Effect of the Invention

Improved durability of a rubber crawler provided with wheel fall-off prevention protrusions.

### Brief Description of the Drawings

FIG 1 is a plan view of extracted metal cores provided with wheel fall-off prevention protrusions.
FIG 2 is an outer peripheral plan view of a conventional rubber crawler to which the metal cores of FIG. 1 have been applied.
FIG 3 is, an outer peripheral plan view of a conventional rubber crawler similar to FIG 2.
FIG. 4 is an outer peripheral plan view of a first exemplary embodiment of a rubber crawler of the present invention, in which the metal cores shown in FIG 1 have been applied.
FIG 5 is an outer peripheral plan view of a second exemplary embodiment of a rubber crawler of the present invention, in which the metal cores shown in FIG 1 have been applied.
FIG 6 is an outer peripheral plan view of a third exemplary embodiment of a rubber crawler of the present invention, in which other metal cores provided with wheel fall-off prevention protrusions have been applied.

### Best Mode of Implementing the Invention

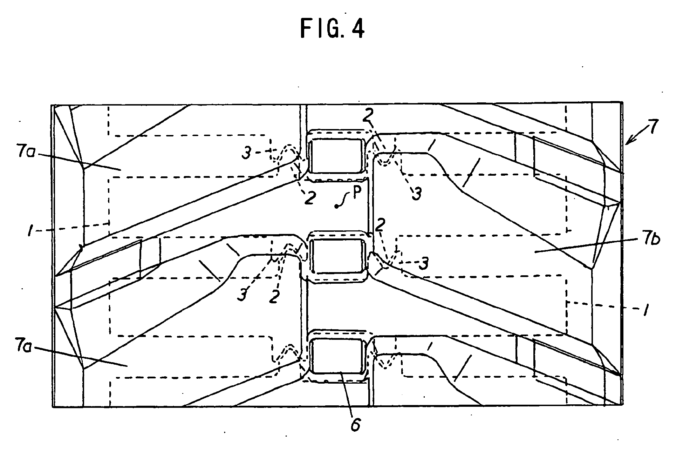

Explanation will now be given in more detail of a rubber crawler 7 of the present invention, with reference to the drawings. FIG 4 is an outer peripheral plan view of a first exemplary embodiment of the rubber crawler 7, in which the metal cores 1 shown in FIG. 1 have been applied, with the rubber crawler 7 continuous up-down in the drawing. The reference numerals 1 to 6 are as already explained. It should be noted that the rubber lugs 7a, 7b in the illustrated example are basically substantially the same as the rubber lugs 5a, 5b shown in FIG 2, however, their arrangement is disposed shifted by about 1/2 of the pitch upward (forward).

Namely, the rubber lugs 7a, 7b are staggered up-down (front-rear), in a slightly broadening shape to the front-rear, with the sprocket engagement holes 6 interposed therebetween.

The left side rubber lugs 7a are disposed so as to cover the front-rear of the protrusions 2, 3 (namely the meshing portions) on the left side of the metal cores 1, and the right side rubber lugs 7b are disposed so as to cover the protrusions 2, 3 on the right side of the metal cores 1 that are disposed shifted by one place away. The protrusions 2, 3 from the other side meshed therewith are also covered by the rubber lugs 7a, 7b.

In this manner, by covering the meshing portions of all of the protrusions 2, 3 of the rubber crawler 7, a large force acts against the protrusions 2, 3 projecting out to the outside. Consequently cracks and the like generated at these positions, and projection out of the protrusions can be significantly reduced, significantly improving the durability of the rubber crawler 7.

The rubber lugs 7a, 7b are also of a size corresponding to two front-rear meshing portions of the protrusions 3, 2. The surface pressure on the rubber lugs 7a, 7b is therefore lower, and the durability of the rubber lugs 7a, 7b is higher. A rubber crawler 7 that is particularly optimally applied to construction machines of high load is consequently obtained.

In addition, disposing the left and right rubber lugs 7a, 7b staggered up-down (front-rear) acts at the same time as a counter measure to vibrations to the road.

The protrusions 2, 3 of the metal core 1 are also provided with point symmetry about a central point P of the metal core 1. The rubber lugs 7a, 7b are disposed so as to cover the meshing portions of the protrusions 2, 3 of the metal cores 1. The surface pressure distribution on the rubber lugs 7a, 7b is thereby made uniform. Occurrence of external flaws, abrasion, and vibration in the rubber crawler 7a is consequently reduced.

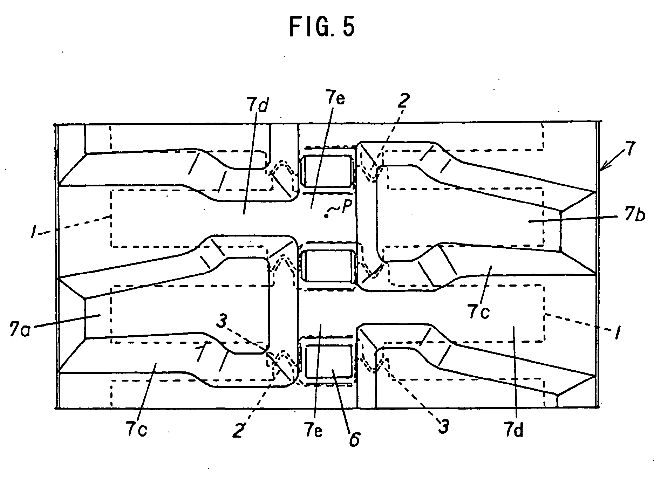

FIG. 5 is an outer peripheral plan view of a second exemplary embodiment of the rubber crawler 7, in which the metal cores 1 shown in FIG 1 have been used, with the rubber crawler 7 continuous up-down in the drawing. It should be noted that the rubber lugs 7a, 7b in the illustrated example are basically substantially the same as the rubber lugs 5a, 5b shown in FIG 3, however, their arrangement is disposed shifted by about 1/2 of the pitch upward (forward).

Namely, the rubber lugs 7a, 7b are staggered up-down (front-rear), in a slightly broadening shape to the front-rear with the sprocket engagement hole 6 interposed therebetween. Skirt portions 7c (inclined side walls of the rubber crawler) of the left side rubber lugs 7a are disposed so as to cover the front-rear of the protrusions 2, 3 (namely the meshing portions) on the left side of the metal cores 1a, and the skirt portions 7c of the right side rubber lugs 7b are disposed so as to cover the protrusions 2, 3 on the right side of the metal cores 1b that are disposed shifted by one place away. The protrusions 2, 3 that are meshed therewith are also covered by the skirt portions 7c.

In this manner by the meshing portions of the protrusions 2, 3 being covered by the skirt portions 7c of rubber thickness thicker than that of the lug base 7d and separated from ground contact, external flaws do not readily occur to the rubber lugs 7a, 7b, and any external flaws do not readily reach the metal core 1.

The rubber lugs 7a, 7b also cover an end portion in the front-rear direction of the metal cores 1. By causing the rubber lugs 7a, 7b to be present imposed between the end portions of the metal cores 1 and the ground contact surface in this manner, the end portions of the rubber crawler 7 do not readily peel off on contact with stone and the like. It should be noted that preferably the whole of the end portions in the front-rear direction of the metal cores 1 are covered by the rubber lugs 7a, 7b.

Usually the position of the lug base 7d (base body rubber thickness) between the front-rear rubber lugs 7a-7a, 7b-7b is determined by a distance from a non-illustrated steel cord. In addition the position of lug bases 7e between the left and right rubber lugs 7a-7b, is determined by the distance to the metal core 1. A step is therefore generated at the boundary portion of the lug base 7d between the front-rear rubber lugs 7a-7a, 7b-7b and the lug base 7e between the left and right rubber lugs 7a-7b, and splitting readily occurs at this step.

However, in the rubber crawler 7 of the second exemplary embodiment, the lug base 7d between the front-rear rubber lugs 7a-7a, 7b-7b and the lug base 7e between the left and right rubber lugs 7a-7b are configured in the same plane. Breakage of the lug bases 7d, 7e is consequently suppressed, since there is no step formed at the boundary portion between the lug base 7d and the lug base 7e.

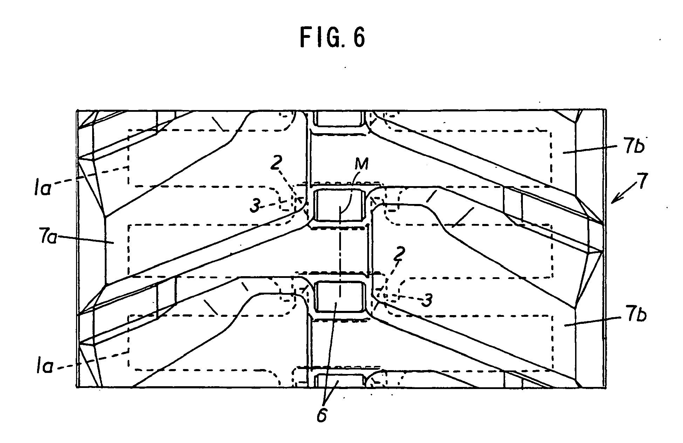

FIG 6 is an example using metal cores 1a provided with other wheel fall-off prevention protrusions 2, 3. There are two protrusions 2 provided to the end portion at the top side of the metal core 1a, these two protrusions 2 being axisymmetric about a center line M of the metal core 1a, which is aligned with the centre line in the width direction of the rubber crawler 7. There are also two protrusions 3 provided to the end portion at the bottom side of the metal core 1a at positions outside relative to the protrusions 2, these two protrusions 3 being axisymmetric about the center line M. Namely the protrusions 3 are configured so as to sandwich the protrusions 2 of the metal core 1a that is one position below. The formed rubber lugs 7a, 7b are formed in similar manner to those of FIG 4, and so are disposed shifted by about 1/2 of the pitch upward (forward).

Namely, the rubber lugs 7a, 7b are staggered up-down (front-rear), in a slightly broadening shape to the front-rear with the sprocket engagement hole 6 interposed therebetween. The left side rubber lugs 7a are disposed so as to cover the front-rear of the protrusions 2, 3 (namely the meshing portions) on the left side of the metal cores 1a, and the right side rubber lugs 7b are disposed so as to cover the protrusions 2, 3 on the right side of the metal core 1a that is disposed shifted one place away. The protrusions 2, 3 that are meshed therewith are also covered by the skirt portions 7c of the rubber lugs 7a, 7b.

By providing the protrusions 2, 3 of the metal cores 1a axisymmetric about the center line M of the metal cores 1a, and by disposing the rubber lugs 7a, 7b so as to cover the meshing portions of the protrusions 2, 3 in this manner, the surface pressure distribution on the rubber lugs 7a, 7b is made uniform. Occurrence of external flaws, abrasion, and vibration in the rubber lugs 7a, 7b is consequently reduced.

### Industrial Applicability

The present invention is as above, is applicable to all rubber crawlers using metal cores provided with wheel fall-off prevention protrusions, and a rubber crawler can be provided with improved durability.

### Explanation of the Reference Numerals

- 1, 1a, 1b, 1c: metal core
- 2, 3: protrusion
- 5a, 5b: rubber crawler
- 6: sprocket engagement hole
- 7a, 7b: rubber lug
- 7c: skirt portion
- 7d, 7e: lug base
- A: position of wheel fall-off prevention protrusions not covered by rubber crawler

## Claims

1. A rubber crawler (7) comprising metal cores (1) provided at front and rear with longitudinally extending protrusions (2, 3) either side of sprocket engagement holes for wheel fall-off prevention, the metal cores being buried at a fixed pitch along the longitudinal direction of a rubber elastic body, and the wheel fall-off prevention protrusions of adjoining metal cores meshing with each other; and rubber lugs (7a, 7b) formed to the outer peripheral surface of the rubber crawler so as to correspond to the meshing portions of the wheel fall-off prevention protrusions; wherein the rubber lugs on the left and right are staggered in the longitudinal direction, **characterized in that** the rubber lugs are of a size corresponding to two of the meshing portions in the front-rear direction, and **in that** the rubber lugs cover the meshing portions with skirt portions (7c) of the rubber lugs.

2. A rubber crawler as claimed in claim 1, wherein the rubber lugs cover at least one portion of the end portions of the metal cores in the front-rear direction.

3. A rubber crawler as claimed in claim 1 or 2, wherein a lug base between left and right rubber lugs and a lug base between front and rear rubber lugs are in the same plane.

4. A rubber crawler as claimed in any of claims 1 to 3, wherein the wheel fall-off prevention protrusions are provided axially symmetrical to each other about a center line of the metal core, or are provided with point symmetry to the center point of the metal core.

## Patentansprüche

1. Eine Gummiraupenkette (7), umfassend Metallkerne (1), die vorne und hinten mit längsgerichteten Vorsprüngen (2, 3) auf jeder Seite von Zahneingriffslöchern zur Vermeidung des Abfallens von Reifen vorgesehen sind, wobei die Metallkerne mit einem festen Abstand entlang der Längsrichtung eines gummielastischen Körpers eingebettet sind, und die Vorsprünge zur Vermeidung eines Abfallens des Reifens aus aneinander angrenzenden Metallkerne greifen ineinander; und Gummiansätze (7a, 7b) sind auf der äußeren peripheren Oberfläche der Gummiraupenkette gebildet, um zu den ineinandergreifenden Abschnitten der Vorsprünge zur Vermeidung eines Abfallens des Reifens zu passen; wobei die Gummiansätze rechts und links in der Längsrichtung gestapelt sind, **dadurch gekennzeichnet, dass** die Gummiansätze eine Größe entsprechend zwei der ineinandergreifenden Abschnitte in der vorwärts-rückwärts Richtung aufweisen, und **dadurch**, dass die Gummiansätze die ineinandergreifenden Abschnitte mit Schürzenabschnitten (7c) der Gummiansätze abdecken.

2. Gummiraupenkette nach Anspruch 1, wobei die Gummiansätze zumindestens ein Abschnitt der Endabschnitte der Metallkerne in der vorwärts-rückwärts Richtung abdecken.

3. Gummiraupenkette nach Anspruch 1 oder 2, wobei eine Ansatzbasis zwischen linken und rechten Gummiansätzen und eine Ansatzbasis zwischen vorderen und hinteren Gummiansätzen in derselben Ebene liegen.

4. Gummiraupenkette nach irgendeinem der Ansprüche 1 bis 3, wobei die Vorsprünge zur Vermeidung eine Abfallens des Reifens axialsymmetrisch zueinander um eine Mittellinie des Metallkern angeordnet sind, oder mit einer Punktsymmetrie zu dem Mittelpunkt des Metallkerns angeordnet sind.

## Revendications

1. Chenille en caoutchouc (7) comprenant des noyaux métalliques (1) pourvus à l'avant et l'arrière de protubérances (2, 3) s'étendant longitudinalement de part et d'autre de trous d'engagement de pignon pour éviter le désengagement des roues, les noyaux métalliques étant enterrés avec un pas fixe le long de la direction longitudinale d'un corps élastique en caoutchouc, et les protubérances évitant le désengagement des roues de noyaux métalliques contigus en prise les unes avec les autres ; et des saillies en caoutchouc (7a, 7b) formées à la surface périphérique externe de la chenille en caoutchouc de sorte à correspondre aux parties en prise des protubérances évitant le désengagement des roues ; où les saillies en caoutchouc sur la gauche et la droite sont échelonnées dans la direction longitudinale, **caractérisée en ce que** les saillies en caoutchouc ont une taille correspondant à deux des parties en prise dans la direction avant-arrière, et **en ce que** les saillies en caoutchouc couvrent les parties en prise à l'aide de parties de jupe (7c) des saillies en caoutchouc.

2. Chenille en caoutchouc selon la revendication 1, dans laquelle les saillies en caoutchouc couvrent au moins une partie des parties d'extrémité des noyaux métalliques dans la direction avant-arrière.

3. Chenille en caoutchouc selon la revendication 1 ou 2, dans laquelle une base de saillie entre des saillies en caoutchouc gauche et droite et une base de saillie entre des saillies en caoutchouc avant et arrière se trouvent dans le même plan.

4. Chenille en caoutchouc selon l'une des revendications 1 à 3, dans laquelle les protubérances évitant le désengagement des roue sont prévues de manière axialement symétrique entre elles autour d'une ligne centrale du noyau métallique, ou elles sont prévues en symétrie ponctuelle par rapport au point central du noyau métallique.
